# EUROPEAN PATENT APPLICATION

(11) **EP 4 074 806 A1**
(43) Date of publication of application: **19.10.2022**
(21) Application number: 20899647.0
(22) Date of filing: 10.12.2020
(51) Int. Cl.: C09K 3/22

(54) **DUST SUPPRESSING AGENT AND DUST SUPPRESSING METHOD USING SAME**

(30) Priority: 11.12.2019 KR 20190164619
(71) Applicant: POSCO, Pohang-si, Gyeongsangbuk-do 37859 (KR); Misan E&C, Seoul 07995 (KR)
(72) Inventor: LEE, Weonhui, Pohang-si Gyeongsangbuk-do 37859 (KR); RHEE, Qhwang-Hee, Seoul 04098 (KR); KIM, Ki-Hang, Pohang-si Gyeongsangbuk-do 37859 (KR); KIM, Seong-Moon, Pohang-si Gyeongsangbuk-do 37859 (KR)
(74) Representative: Meissner Bolte Partnerschaft mbB
(86) International application number: PCT/KR2020/018056
(87) International publication number: WO 2021/118258

(57) **Abstract**

The dust suppressant according to an exemplary embodiment of the present invention includes 10 to 60 wt% of an anionic surfactant, 1 to 30 wt% of a non-ionic surfactant, 10 to 30 wt% of a glycol ether and 20 to 50 wt% of a solvent.

## Description

### [Technical Field]

An exemplary embodiment of the present invention relates to a dust suppressant and a dust suppressing method using the same. Specifically, an exemplary embodiment of the present invention relates to a multi-purpose coal dust suppressant that adsorbs dust scattered during coal handling work by buckets, suppresses the generation of additional dust in a transportation process such as a hopper and conveyor belt system, and simultaneously extinguishes the autoxidation of coal by a cooling action, and a dust suppressing method using the same.

### [Background Art]

Coal, which is a porous material, generally generates dust during cargo handling and transportation work. Further, coal absorbs oxygen in the air during cargo handling and transportation, and oxygen reacts with volatile components to generate heat, so that an autoxidation phenomenon occurs. The smaller the size of coal particles, the larger the surface area and the larger the contact surface with oxygen, so that the dust promotes autoxidation. Since volatile components volatilize due to such an autoxidation phenomenon, a foul odor due to harmful gas is generated.

The actual consumers that use coal store coal after cargo handling and transportation work, but it is a first important factor and the main function of a foam-type anti-scattering agent to adsorb dust scattered during cargo handling work by buckets by forming foam.

However, the foam-type anti-scattering agent reduces scattered dust by a method of adsorbing the scattered dust by maximizing the surface area relative to water, but cannot suppress the generation of additional dust due to the lack of permeability during transportation to a repository by a hopper and conveyor belt system after bucket work, nor suppress the generation of harmful gas due to the autoxidation phenomenon of volatile components. Therefore, it is a second most important factor for a foam-type anti-scattering agent to have permeability, such that the foam that has adsorbed dust is quickly reduced to a liquid phase and quickly permeates into coal to suppress the generation of additional dust and the autoxidation is extinguished by a cooling action to suppress the generation of harmful gas.

Recently, imports of coal, which is inexpensive due to a high proportion of pulverized coal, have been increasing and environmental regulations for scattered dust have been tightened, so that there is a need for developing a dust suppressant that fundamentally suppresses dust during cargo handling and transportation work.

Therefore, there is an emerging need for a multi-purpose dust suppressant capable of suppressing the generation of additional dust by adsorbing dust scattered during cargo handling work by buckets, quickly reducing the scattered dust to a liquid phase, and permeating into coal. Further, a technique for reducing a foul odor by suppressing a volatile harmful gas generated by autoxidation during cargo handling and transportation work is also a technique that is indispensable in terms of coal management before actual consumers use coal.

As a dust suppressant, a foam-type anti-scattering agent that prevents the scattering of dust by utilizing polyvinyl alcohol and a surfactant is known.

This anti-scattering method is a method in which a membrane formed by mixing polyvinyl alcohol, a surfactant and an additive (hexylene glycol) as main raw materials with water and spraying the resulting mixture in the form of foaming cures the surface of coal to suppress dust. but, the method only maximizes the application area and reduces the amount used through the generation of foam, and does not fundamentally consider the dust adsorption function of foam.

Such an anti-scattering agent is not a method of dealing with dust generated during transportation work, but merely suppresses the generation of dust by curing the surface of coal piled up in an open space.

### [Disclosure]

### [Technical Problem]

An exemplary embodiment of the present invention has been made in an effort to provide a dust suppressant and a dust suppressing method using the same. Specifically, an exemplary embodiment of the present invention has been made in an effort to provide a multi-purpose coal dust suppressant that adsorbs dust scattered during coal handling work by buckets, suppresses the generation of additional dust in a transportation process such as a hopper and conveyor belt system, and simultaneously extinguishes the autoxidation of coal by a cooling action, and a dust suppressing method using the same.

### [Technical Solution]

The dust suppressant according to an exemplary embodiment of the present invention includes 10 to 60 wt% of an anionic surfactant, 1 to 30 wt% of a non-ionic surfactant, 10 to 30 wt% of a glycol ether and 20 to 50 wt% of a solvent.

The dust suppressant according to an exemplary embodiment of the present invention may further include 0.1 to 10 wt% of a foam stabilizer.

The anionic surfactant may include one or more of sodium 2-ethylhexyl sulfate, sodium hexyl sulfate, sodium octyl sulfate, sodium dioctyl sulfosuccinate, ammonium 2-ethylhexyl sulfate, ammonium hexyl sulfate, ammonium octyl sulfate and ammonium dioctyl sulfosuccinate.

The non-ionic surfactant may include one or more of polyoxyethylene alkyl ether, polyoxyethylene alkenyl ether and polyoxyethylene alkylphenyl ether.

The glycol ether may include one or more of diethyleneglycol diethyl ether, diethyleneglycol dibutyl ether, dipropyleneglycol dimethyl ether, dipropyleneglycol dibutyl ether, triethylene glycol dimethyl ether, triethylene glycol diethyl ether, triethyleneglycol dibutyl ether, ethylene glycol methyl ether acetate, ethylene glycol monoethyl ether acetate, ethylene glycol monobutyl ether acetate, propylene glycol monomethyl ether acetate, diethyleneglycol monobutyl ether, and dipropylene glycol.

The dust suppressing method according to an exemplary embodiment of the present invention sprays a dust suppressant into coal in the form of foaming by spraying the dust suppressant in the form of a foam concentrate along with water by water pressure.

The dust suppressant and the water may be sprayed at a ratio of 1 to 5 wt% and 95 to 99 wt%, respectively.

According to an exemplary embodiment of the present invention, it is possible to adsorb scattered dust by using a small amount of dust suppressant to form foam only by water pressure without the power of a pump.

Further, the foam adsorbing the dust is reduced to a liquid phase to permeate into coal, and thus is effective in suppressing the generation of additional dust.

In addition, since the dust suppressant can extinguish the autoxidation of volatile components by a cooling action while quickly permeating into coal, the dust suppressant is effective in reducing a foul odor during transportation work.

Furthermore, since it is possible to suppress the scattered dust of coal, suppress the generation of additional dust, and simultaneously reduce a foul odor due to autoxidation, coal, which is inexpensive due to a high proportion of pulverized coal, can be used without environmental problems, so that coal can be purchased economically and managed safely and environmentally.

### [Mode for Invention]

The terminology used herein is solely for reference to specific exemplary embodiments and is not intended to limit the present invention. The singular forms used herein also include the plural forms unless the phrases do not express the opposite meaning explicitly. As used in the specification, the meaning of "include" specifies a specific feature, region, integer, step, action, element and/or component, and does not exclude the presence or addition of another feature, region, integer, step, action, element, and/or component.

When a part is referred to as being "above" or "on" another part, it may be directly above or on another part or may be accompanied by another part therebetween. In contrast, when one part is referred to as being "directly above" another part, no other part is interposed therebetween.

Although not differently defined, all terms including technical terms and scientific terms used herein have the same meaning as the meaning that is generally understood by a person with ordinary skill in the art to which the present invention pertains. The terms defined in generally used dictionaries are additionally interpreted to have the meaning matched with the related art document and currently disclosed contents, and are not interpreted to have an ideal meaning or a very formal meaning as long as the terms are not defined.

Further, unless otherwise specified, % means wt%, and 1 ppm is 0.0001 wt%.

In an exemplary embodiment of the present invention, further including an additional element in a component means that the additional element is included while replacing an element that is the balance by an additional amount of the additional element.

Hereinafter, exemplary embodiments of the present invention will be described in detail such that a person with ordinary skill in the art to which the present invention pertains can easily carry out the present invention. As those skilled in the art would realize, the described embodiments may be modified in various different ways, all without departing from the spirit or scope of the present invention.

The dust suppressant according to an exemplary embodiment of the present invention includes 10 to 60 wt% of an anionic surfactant, 1 to 30 wt% of a non-ionic surfactant, 10 to 30 wt% of a glycol ether and 20 to 50 wt% of a solvent. In the dust suppressant according to an exemplary embodiment of the present invention, carbon groups of a hydrophobic portion are adsorbed on the surface of coal by the above-described component composition and compounding ratio, and a hydrophilic portion and glycol groups pull water molecules to reduce the interfacial tension of the surface of coal. This suppresses the generation of additional dust by increasing the adsorptive power of coal and water to allow coal to quickly absorb moisture, thereby increasing the weight of fine coal molecules. In addition, for the suppression of the generation of additional dust by the permeability, moisture remains due to a peculiar aggregation phenomenon (caking) even after the moisture evaporates, thereby suppressing the generation of dust for a certain period of time.

Hereinafter, each component will be specifically described.

The dust suppressant includes 10 to 60 wt% of an anionic surfactant.

The anionic surfactant, along with a non-ionic surfactant, improves permeability. When the anionic surfactant is included in too small an amount, the permeability and foamability of the dust suppressant cannot be appropriately secured. When the anionic surfactant is included in too large an amount, the dust adsorbability of the dust suppressant deteriorates. More specifically, the dust suppressant may include 20 to 40 wt% of the anionic surfactant.

The anionic surfactant may include one or more of sodium 2-ethylhexyl sulfate, sodium hexyl sulfate, sodium octyl sulfate, sodium dioctyl sulfosuccinate, ammonium 2-ethylhexyl sulfate, ammonium hexyl sulfate, ammonium octyl sulfate and ammonium dioctyl sulfosuccinate. More specifically, the anionic surfactant may include sodium dioctyl sulfosuccinate.

The dust suppressant includes 1 to 30 wt% of a non-ionic surfactant. The non-ionic surfactant, along with the anionic surfactant, improves permeability. When the non-ionic surfactant is included in too small an amount, the permeability of the dust suppressant cannot be appropriately secured. When the non-ionic surfactant is included in too large an amount, the dust adsorbability of the dust suppressant deteriorates. More specifically, the dust suppressant may include 5 to 15 wt% of the non-ionic surfactant.

The non-ionic surfactant may include one or more of polyoxyethylene alkyl ether, polyoxyethylene alkenyl ether and polyoxyethylene alkylphenyl ether. More specifically, the non-ionic surfactant may include polyoxyethylene alkyl ether.

The dust suppressant includes 10 to 30 wt% of a glycol ether. The glycol ether lowers the viscosity and increases the binding force between the constituent components of the composition, and also performs the function of extending the usable period and improving the moisture drying efficiency. When a glycol ether is included in too small an amount, the glycol ether may not perform the above-described role appropriately. When the glycol ether is included in too large an amount, a problem with the formation of foam may occur. More specifically, the dust suppressant may include 15 to 25 wt% of a glycol ether.

The glycol ether may include one or more of diethyleneglycol diethyl ether, diethyleneglycol dibutyl ether, dipropyleneglycol dimethyl ether, dipropyleneglycol dibutyl ether, triethylene glycol dimethyl ether, triethylene glycol diethyl ether, triethyleneglycol dibutyl ether, ethylene glycol methyl ether acetate, ethylene glycol monoethyl ether acetate, ethylene glycol monobutyl ether acetate, propylene glycol monomethyl ether acetate, diethyleneglycol monobutyl ether, and dipropylene glycol. More specifically, the glycol ether may include diethyleneglycol monobutyl ether.

The dust suppressant may further include a glycol compound in addition to the glycol ether. Specifically, the dust suppressant may further include one or more of propylene glycol and butyl diglycol. When the dust suppressant further includes these components, it is possible to further include these components by 1 to 10 wt% as a combined amount.

The dust suppressant includes 20 to 50 wt% of a solvent. By including a solvent, a dust suppressant may be stably produced in a form having excellent water solubility and dispersibility.

The dust suppressant may include 0.1 to 10 wt% of a foam stabilizer in addition to the above-described components. An example of the foam stabilizer may be one or more of glycerin, glyceryl glucoside, polyoxyethylene methyl gluceth, a betaine-based ampholytic surfactant and alkyl alcohol. By adding the foam stabilizer, foam may be more stably formed.

The dust suppressing method according to an exemplary embodiment of the present invention sprays a dust suppressant into coal in the form of foaming by spraying the dust suppressant in the form of a foam concentrate along with water by water pressure.

The foam concentrate form refers to an aqueous functional drug (product) that is mixed with water to generate foam (bubbles), the foam form refers to a foam (bubbles) generated when water is mixed with a dust suppressant produced in the form of an aqueous foam concentrate, the dust suppressant according to an exemplary embodiment of the present invention may be mixed with water to produce an aqueous dust suppressant solution only when the dust suppressant is a product in the form of an aqueous foam concentrate, and only in this manner, and the dust suppressant may be expanded to the volume of the foam magnification, and thus may be uniformly dispersed and applied to a large amount of coal in the form of foam.

In this manner, in an exemplary embodiment of the present invention, the dust suppressant is produced in the form of an aqueous foam concentrate such that a core material of the dust suppressant is uniformly dispersed and applied to all bituminous coal as much as possible at a suitable concentration (ppm).

Here, the dust suppressant according to an exemplary embodiment of the present invention is intended to be mixed with water such that foam is well generated, but when the air is mixed together, the foam may be even more generated, thereby causing the dust suppressant to be uniformly dispersed and applied to coal.

That is, since water is supplied by water pressure without artificially mixing air with the dust suppressant, the air is mixed with water within the range of the foam magnification, so there is no problem in generating foam. In order to generate a better foam even more and maintain the foam even better, the air may be mixed through a compressor and the like.

The dust suppressant and water may be sprayed at a ratio of 1 to 5 wt% and 95 to 99 wt%, respectively. When the amount of dust suppressant is too small, the adsorbability of scattered dust may be reduced, so the quality may deteriorate. When the amount of dust suppressant is too large, the economic feasibility may deteriorate. More specifically, the dust suppressant and water may be sprayed at a ratio of 1 to 3 wt% and 97 to 99 wt%, respectively.

According to embodiments of the present invention, the coal onto which the dust suppressant has been sprayed exhibits a characteristic that a peculiar aggregation phenomenon (caking) occurs even in a moisture-free dry state to minimize the scattered dust. Such a characteristic is a phenomenon caused by the special surfactant compound composition of the present invention, which cannot be seen in existing foam-type anti-scattering agents, and provides a technique for long-term storage of coal before use even though actual customers do not sprinkle water.

Hereinafter, preferred Examples of the present invention and Comparative Examples will be described. However, the following Examples are only preferred Examples of the present invention, and the present invention is not limited to the following Examples.

### Examples

Dust suppressants were prepared by mixing the components at proportions, which are shown in the following Table 1. After 250 ml of an aqueous solution was each poured into a container in an amount of 1 wt%, 2.5 g of 100 mesh powdered coal was put into the container, and the time taken for the coal to settle in the aqueous solution was measured and is summarized in the following Table 1.

In addition, in order to evaluate the dust suppression property after drying, 10 ml of each aqueous solution with 1 wt% of the dust suppressant was sprayed and dried while 50 g of coal was each put into a dish-shaped container, and then the state was measured and is summarized in the following Table 1.

**[Table 1]**

| | Anionic surfactant (sodium dioctyl sulfosucci nate) | Non-ionic surfactant (polyoxyeth ylene alkyl ether) | Glycol ether (diethylene glycol monobutyl ether) | Foam stabiliz er (glycer yl glucosi de) | Solv ent (wat er) | Settli ng time | Aggregat ion phenom enon |
|---|---|---|---|---|---|---|---|
| Example 1 | 40 wt% | 10 wt% | 15 wt% | 5wt% | 30wt % | 10 seco nds | O |
| Example 2 | 35 wt% | 5 wt% | 20wt% | 3wt% | 37wt % | 11 seco nds | O |
| Example 3 | 25 wt% | 15 wt% | 15 wt% | 5wt% | 40wt % | 14 seco nds | O |
| Compar ative Example 1 | 50 wt% | - | 20wt% | 5wt% | 35wt % | 42 seco nds | O |
| Compar ative Example 2 | - | 50wt% | 20wt% | 5wt% | 35wt % | 50 seco nds | O |
| Compar ative Example 3 | F 500(Hazard Control Technologies, INC) | | | | | 60 seco nds | X |

As shown in Table 1, it can be confirmed that as in Examples 1 to 3,Examples 1 to 3 appropriately including an anionic surfactant, a non-ionic surfactant, and a glycol ether all have a short settling time, and cause an aggregation phenomenon.

That is, it was found that the generation of dust was suppressed in the coal sprayed with the aqueous dust suppressant solution according to an exemplary embodiment of the present invention. Furthermore, it can be confirmed that a characteristic that the dust suppressant suppresses the generation of dust for a long period of time has been implemented.

In contrast, it can be confirmed that in Comparative Example 1 and Comparative Example 2, the permeability is inferior to that of Examples 1 to 3 because the non-ionic surfactant was not added thereto or the anionic surfactant was not added thereto.

Meanwhile, it is confirmed that it is difficult for the commercially available F500 to suppress the generation of dust for a long period of time because the commercially available F500 is not only inferior to Examples 1 to 3 in terms of permeability, but also does not cause an aggregation phenomenon.

The present invention is not limited to the Examples, but may be prepared in various forms, and a person with ordinary skill in the art to which the present invention pertains will understand that the present invention can be implemented in another specific form without changing the technical spirit or essential feature of the present invention. Therefore, it should be understood that the above-described Examples are illustrative only in all aspects and are not restrictive.

## Claims

1. A dust suppressant comprising 10 to 60 wt% of an anionic surfactant, 1 to 30 wt% of a non-ionic surfactant, 10 to 30 wt% of a glycol ether and 20 to 50 wt% of a solvent.

2. The dust suppressant of claim 1,
further comprising 0.1 to 10 wt% of a foam stabilizer.

3. The dust suppressant of claim 1, wherein
the anionic surfactant comprises one or more of sodium 2-ethylhexyl sulfate, sodium hexyl sulfate, sodium octyl sulfate, sodium dioctyl sulfosuccinate, ammonium 2-ethylhexyl sulfate, ammonium hexyl sulfate, ammonium octyl sulfate and ammonium dioctyl sulfosuccinate.

4. The dust suppressant of claim 1, wherein
the non-ionic surfactant comprises one or more of polyoxyethylene alkyl ether, polyoxyethylene alkenyl ether and polyoxyethylene alkylphenyl ether.

5. The dust suppressant of claim 1, wherein
the glycol ether comprises one or more of diethyleneglycol diethyl ether, diethyleneglycol dibutyl ether, dipropyleneglycol dimethyl ether, dipropyleneglycol dibutyl ether, triethylene glycol dimethyl ether, triethylene glycol diethyl ether, triethyleneglycol dibutyl ether, ethylene glycol methyl ether acetate, ethylene glycol monoethyl ether acetate, ethylene glycol monobutyl ether acetate, propylene glycol monomethyl ether acetate, diethyleneglycol monobutyl ether, and dipropylene glycol.

6. A dust suppressing method comprising spraying the dust suppressant described in any one of claims 1 to 5 into coal in the form of foaming by spraying the dust suppressant in the form of a foam concentrate along with water by water pressure.

7. The dust suppressing method of claim 6, wherein
the dust suppressant and the water are sprayed at a ratio of 1 to 5 wt% and 95 to 99 wt%, respectively.
